# EUROPÄISCHE PATENTANMELDUNG

(11) **EP 3 624 028 A1**
(43) Veröffentlichungstag der Anmeldung: **18.03.2020**
(21) Anmeldenummer: 18194039.6
(22) Anmeldetag: 12.09.2018
(51) Int. Cl.: G06Q 10/08

(54) **ERKENNEN VON BELEGTEN UND/ODER UNBELEGTEN LADERAUMBEREICHEN IN EINEM LADERAUM EINES NUTZFAHRZEUGS**

(71) Anmelder: Schmitz Cargobull AG, 48341 Altenberge (DE)
(72) Erfinder: Bartelt, Gerd, 77767 Appenweier (DE)
(74) Vertreter: Cohausz & Florack

(57) **Zusammenfassung**

Es wird unter ein Verfahren zum Erkennen von belegten und/oder unbelegten Laderaumbereichen in einem Laderaum eines Nutzfahrzeugs (2), wobei der Laderaum (20) in eine Vielzahl von Laderaumbereiche (27, 28, 29) unterteilbar ist, wobei in dem Laderaum ein oder mehrere Lichtsignalquellen (23, 271, 281, 291) und eine Vielzahl von Lichtsignaldetektoren (24, 25, 272, 273, 282, 283, 292, 293) oder eine Vielzahl von Lichtsignalquellen (23, 271, 281, 291) und ein oder mehrere Lichtsignaldetektoren (24, 25, 272, 273, 282, 283, 292, 293) angeordnet sind, und wobei das Verfahren umfasst:
- Ansteuern der Lichtsignalquellen (23, 271, 281, 291) und/oder der Lichtsignaldetektoren (24, 25, 272, 273, 282, 283, 292, 293) derart, dass jedes der in Reaktion auf ein durch eine jeweilige Lichtsignalquelle ausgesendetes Lichtsignal (274, 284, 285, 294) durch einen jeweiligen Lichtsignaldetektor der Lichtsignaldetektoren (24, 25, 272, 273, 282, 283, 292, 293) detektiertes Lichtsignal einem jeweiligen Laderaumbereich (27, 28, 29) zuordenbar ist;
- Erhalten von Lichtsignaldetektionsereignisinformationen von den Lichtsignaldetektoren (24, 25, 272, 273, 282, 283, 292, 293);
- Auswerten der Lichtsignaldetektionsereignisinformationen, um zu bestimmen, welche der Laderaumbereiche (27, 28, 29) des Laderaums (20) belegt oder unbelegt sind.

## Beschreibung

### Gebiet

Beispielhafte Ausführungsformen der Erfindung betreffen das Erkennen von belegten und/oder unbelegten Laderaumbereichen in einem Laderaum eines Nutzfahrzeugs.

### Hintergrund

Im Stand der Technik sind verschiedene beispielsweise kamerabasierte Verfahren zum Erkennen von belegten und/oder unbelegten Laderaumbereichen in einem Laderaum eines Nutzfahrzeugs bekannt Diese Verfahren sind jedoch störanfällig und/oder erfordern komplexe Systeme.

### Zusammenfassung einiger beispielhafter Ausführungsformen der Erfindung

Die vorliegende Erfindung hat sich daher unter anderem die Aufgabe gestellt, diese Probleme zu überwinden.

Gemäß der Erfindung wird ein Verfahren zum Erkennen von belegten und/oder unbelegten Laderaumbereichen in einem Laderaum eines Nutzfahrzeugs offenbart, wobei der Laderaum in eine Vielzahl von Laderaumbereiche unterteilbar ist, wobei in dem Laderaum ein oder mehrere Lichtsignalquellen und eine Vielzahl von Lichtsignaldetektoren oder eine Vielzahl von Lichtsignalquellen und ein oder mehrere Lichtsignaldetektoren angeordnet sind, und wobei das Verfahren umfasst:
- Ansteuern der Lichtsignalquellen und/oder der Lichtsignaldetektoren derart, dass jedes der in Reaktion auf ein durch eine jeweilige Lichtsignalquelle der Lichtsignalquellen ausgesendetes Lichtsignal durch einen jeweiligen Lichtsignaldetektor der Lichtsignaldetektoren detektiertes Lichtsignal einem jeweiligen Laderaumbereich zuordenbar ist;
- Erhalten von Lichtsignaldetektionsereignisinformationen von den Lichtsignaldetektoren;
- Auswerten der Lichtsignaldetektionsereignisinformationen, um zu bestimmen, welche der Laderaumbereiche des Laderaums belegt oder unbelegt sind.

Das offenbarte Verfahren gemäß der Erfindung wird beispielsweise durch eine Vorrichtung (z.B. die unten offenbarte Steuer- und Auswertevorrichtung) ausgeführt.

Gemäß der Erfindung wird ferner eine Steuer- und Auswertevorrichtung offenbart, wobei die Steuer- und Auswertevorrichtung eingerichtet ist zur Ausführung und/oder Steuerung des offenbarten Verfahrens oder umfassend jeweilige Mittel zur Ausführung und/oder Steuerung der Schritte des offenbarten Verfahrens. Dabei können entweder alle Schritte des offenbarten Verfahrens von den Mitteln gesteuert werden, oder alle Schritte des offenbarten Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des Computerprogramms gemäß dem ersten Aspekt der Erfindung) und mindestens einen Prozessor ausgebildet zum Ausführen von Programmanweisungen aus dem mindestens einen Speicher umfassen. Dementsprechend soll auch eine Steuer- und Auswertevorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Steuer- und Auswertevorrichtung zu veranlassen, das offenbarte Verfahren auszuführen und/oder zu steuern.

Alternativ oder zusätzlich können die Mittel ferner eine oder mehrere Kommunikationsschnittstellen (z.B. einen oder mehrere drahtlose und/oder drahtgebundene Netzwerkschnittstellen wie einen oder mehrere Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die offenbarte Steuer- und Auswertevorrichtung auch andere nicht aufgeführte Mittel umfassen kann.

Zum Beispiel ist die offenbarte Steuer- und Auswertevorrichtung Teil eines Nutzfahrzeugs und/oder für ein Nutzfahrzeug.

Gemäß der Erfindung wird ferner ein Nutzfahrzeug und/oder ein Nutzfahrzeugaufbau offenbart, wobei das Nutzfahrzeug und/oder der Nutzfahrzeugaufbau umfasst:
- einen durch Begrenzungsflächen gebildeten Laderaum;
- ein oder mehrere Lichtsignalquellen und eine Vielzahl von Lichtsignaldetektoren oder eine Vielzahl von Lichtsignalquellen und ein oder mehrere Lichtsignaldetektoren,
- die offenbarte Steuer- und Auswertevorrichtung.

Gemäß der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die offenbarte Steuer- und Auswertevorrichtung) zu veranlassen, das offenbarte Verfahren auszuführen und/oder zu steuern.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Im Folgenden werden die Eigenschaften des offenberaten Verfahrens, der offenbarte Steuer- und Auswertevorrichtung, des offenbarten Nutzfahrzeugs, des offenbarten Nutzfahrzeugsaufbau und des offenbarten Computerprogramms - teilweise beispielhaft - beschrieben.

Ein Nutzfahrzeug ist zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Die Erfindung ermöglicht das Erkennen von belegten und/oder unbelegten Laderaumbereichen in einem Laderaum eines Nutzfahrzeugs.

Dabei soll unter einem Laderaumbereich ein Bereich mit einem vorgegebenen Volumen und/oder einer vorgegebenen Grundfläche verstanden werden. Beispielsweise ist der Laderaum in eine Vielzahl solcher Laderaumbereiche unterteilbar (z.B. gedanklich unterteilbar) und/oder unterteilt (z.B. durch Markierungen im Laderaumboden unterteilt).

Dass in dem Laderaum ein oder mehrere Lichtsignalquellen und eine Vielzahl von Lichtsignaldetektoren oder eine Vielzahl von Lichtsignalquellen und ein oder mehrere Lichtsignaldetektoren angeordnet sind, soll so verstanden werden, dass zumindest die folgenden Fälle offenbart sind:
(1) eine Vielzahl von Lichtsignaldetektoren und eine Vielzahl von Lichtsignalquellen sind in dem Laderaum angeordnet;
(2) ein einzelner Lichtsignaldetektor und eine Vielzahl von Lichtsignalquellen sind in dem Laderaum angeordnet, und
(3) eine Vielzahl von Lichtsignaldetektoren und eine einzelne Lichtsignalquelle sind in dem Laderaum angeordnet.

Dementsprechend sollen im Folgenden, auch wenn von einer Vielzahl von Lichtsignalquellen und/oder einer Vielzahl von Lichtsignaldetektoren die Rede ist, jeweils auch die Fälle (2) und (3) als mitoffenbart verstanden werden.

Unter dem Anordnen der Lichtsignalquellen und/oder der Lichtsignaldetektoren in dem Laderaum soll beispielsweise verstanden werden, dass die Lichtsignalquellen derart in dem Laderaum montiert und/oder befestigt sind, dass sie Lichtsignale in den Laderaum aussenden können, und dass die Lichtsignaldetektoren derart in dem Laderaum montiert und/oder befestigt sind, dass sie in den Laderaum ausgesendete Lichtsignale detektieren können. Zu diesem Zweck können die Lichtsignalquellen und die Lichtsignaldetektoren zum Beispiel an und/oder in inneren Begrenzungsflächen des Laderaums montiert und/oder befestigt sind. Dabei kann eine solche innere Begrenzungsfläche des Laderaums beispielsweise durch einen Laderaumboden, ein Laderaumdach, eine Stirnwand, eine Seitenwand und/oder eine Rückwand gebildet sein.

Eine Lichtsignalquelle (z.B. jede der Lichtsignalquellen) ist beispielsweise eingerichtet, ein Lichtsignal auszusenden. Dabei soll unter einem durch eine Lichtsignalquelle ausgesendeten Lichtsignal beispielsweise Licht verstanden werden, das durch die Lichtsignalquelle für eine vorgegebene Dauer und/oder mit einer vorgegebenen Lichtstärke und/oder mit einem vorgegebenen Lichtstrom und/oder mit einer vorgegebenen Leistung und/oder in einem vorgegebenen Wellenlängenbereich abgestrahlt wird. Zum Beispiel ist eine Lichtsignalquelle eingerichtet, Licht mit einer vorgegebene Dauer und/oder mit einer vorgegebenen Lichtstärke und/oder mit einem vorgegebenen Lichtstrom und/oder mit einer vorgegebenen Leistung und/oder in einem vorgegebenen Wellenlängenbereich abzustrahlen, um ein Lichtsignal auszusenden. Zum Beispiel umfasst und/oder ist eine Lichtsignalquelle (z.B. jede der Lichtsignalquellen) ein elektrisches Leuchtmittel wie eine Glühlampe, eine Halogenlampe, eine Leuchtstofflampe, eine Leuchtdiode (LED) oder eine LED-Lampe.

Ein Lichtsignaldetektor (z.B. ein Teil und/oder jeder der Lichtsignaldetektoren) ist beispielsweise eingerichtet, ein ausgesendetes Lichtsignal zu detektieren und eine Lichtsignaldetektionsereignisinformation auszugeben. Zum Beispiel ist ein Lichtsignaldetektor (z.B. ein Teil und/oder jeder der Lichtsignaldetektoren) eingerichtet, ein Lichtsignal durch einen Lichtsignaldetektor zu detektieren, wenn der Lichtsignaldetektor Licht zumindest für eine vorgegebene Dauer und/oder zumindest mit einer vorgegebenen Helligkeit (z.B. Beleuchtungsstärke) und/oder in einem vorgegebenen Wellenlängenbereich erfasst Eine durch einen Lichtsignaldetektor ausgegebene Lichtsignaldetektionsereignisinformation kann beispielsweise ein durch den Lichtsignaldetektor erfasstes Lichtsignaldetektionsereignisse repräsentieren. Dabei ist ein solches Lichtsignaldetektionsereignis beispielsweise das Detektieren (z.B. wenn der Lichtsignaldetektor ein Licht zumindest für eine vorgegebene Dauer und/oder zumindest mit einer vorgegebenen Intensität und/oder Helligkeit und/oder in einem vorgegebenen Wellenlängenbereich erfasst) oder das Nicht-Detektieren (z.B. wenn der Lichtsignaldetektor kein Licht zumindest für eine vorgegebene Dauer und/oder zumindest mit einer vorgegebenen Helligkeit (z.B. Beleuchtungsstärke) und/oder in einem vorgegebenen Wellenlängenbereich erfasst) eines Lichtsignals.

Ein Lichtsignaldetektor (z.B. jeder der Lichtsignaldetektoren) umfasst und/oder ist beispielsweise Lichtdetektor wie eine Fotozelle, ein Fotowiderstand, ein Fototransistor oder eine Fotodiode.

Unter dem Ansteuern einer Lichtsignalquelle soll beispielsweise verstanden werden, dass die Lichtsignalquelle aktiviert wird, um ein Lichtsignal auszusenden. Zu diesem Zweck kann die Steuer- und Auswertevorrichtung beispielsweise eine entsprechende Steuerinformation (z.B. eine Aktivierungsinformation) an die Lichtsignalquelle kommunizieren.

Unter dem Ansteuern eines Lichtsignaldetektors soll beispielsweise verstanden werden, dass der Lichtsignaldetektor aktiviert wird, um ein Lichtsignal zu detektieren. Zu diesem Zweck kann die Steuer- und Auswertevorrichtung beispielsweise eine entsprechende Steuerinformation (z.B. eine Aktivierungsinformation) an den Lichtsignaldetektor kommunizieren. Alternativ oder zusätzlich kann unter dem Ansteuern eines Lichtsignaldetektors beispielsweise auch verstanden werden, dass bewirkt wird, dass eine von dem Lichtsignaldetektor ausgegebene Lichtsignaldetektionsereignisinformation erhalten wird. Zu diesem Zweck kann die Steuer- und Auswertevorrichtung beispielsweise eine entsprechende Steuerinformation (z.B. eine Lichtsignaldetektionsereignisanfrageinformation) an den Lichtsignaldetektor kommunizieren, um den Lichtsignaldetektor zu veranlassen, eine Lichtsignaldetektionsereignisinformation (z.B. in Reaktion auf die Lichtsignaldetektionsereignisanfrageinformation) an die Steuer- und Auswertevorrichtung zu kommunizieren.

Ein durch eine Lichtsignalquelle ausgesendetes Lichtsignal, das durch einen Lichtsignaldetektor detektiert wird, soll beispielsweise dann als einem Laderaumbereich zuordenbar verstanden werden, wenn das Detektieren darauf hindeutet, dass das ausgesendete Lichtsignal entweder zumindest teilweise durch ein in dem Laderaumbereich angeordnetes Ladegut reflektiert wurde oder den Laderaumbereich zumindest teilweise durchdrungen hat.

Die Lichtsignalquellen und/oder Lichtsignaldetektoren sollen beispielsweise derart angesteuert werden, dass ein durch eine Lichtsignalquelle ausgesendetes Lichtsignal, das durch einen Lichtsignaldetektor detektiert wird, zumindest einem Laderaumbereich eindeutig zugeordnet werden kann.

Um Störeinflüsse von benachbarten Lichtsignalquellen vermeiden und die durch benachbarte Lichtsignalquellen ausgesendete Lichtsignale und/oder von benachbarten Lichtsignaldetektoren detektierte Lichtsignale eindeutig zuordnen zu können, können die Lichtsignalquellen und/oder die Lichtsignaldetektoren in einer vorgegebenen Reihenfolge (z.B. zumindest teilweise nacheinander) angesteuert (z.B. aktiviert) werden.

Alternativ oder zusätzlich kann auch eine eindeutige Zuordnung durch die Verwendung verschiedener Wellenlängenbereiche erreicht werden. Zum Beispiel kann vorgesehen sein, dass die Lichtsignalquellen zumindest teilweise (z.B. benachbarte Lichtsignalquellen) eingerichtet sind, Lichtsignale in unterschiedlichen Wellenlängenbereichen auszusenden; und/oder die Lichtsignaldetektoren zumindest teilweise (z.B. benachbarte Lichtsignaldetektoren) eingerichtet sind, Lichtsignale in unterschiedlichen Wellenlängenbereichen zu detektieren. In diesem Fall können Lichtsignalquellen, die Lichtsignale in unterschiedlichen Wellenlängenbereichen aussenden, und/oder Lichtsignaldetektoren, die Lichtsignale in unterschiedlichen Wellenlängenbereichen detektieren, gleichzeitig angesteuert (z.B. aktiviert) werden.

Die Lichtsignaldetektionsereignisinformationen können beispielsweise in Reaktion auf das Ansteuern und/oder während des Ansteuerns erhalten werden. Dabei soll unter dem Erhalten der Lichtsignaldetektionsereignisinformationen beispielsweise das Empfangen der Lichtsignaldetektionsereignisinformationen von den Lichtsignaldetektoren (z.B. an der Steuer- und Auswertevorrichtung) verstanden werden. Zum Beispiel repräsentieren die Lichtsignaldetektionsereignisinformationen für jeden der Lichtsignaldetektoren eine oder mehrere durch den jeweiligen Lichtsignaldetektor erfasste Lichtsignaldetektionsereignisse.

Das Auswerten der Lichtsignaldetektionsereignisinformationen kann gemäß vorgegebenen Regeln wie einem vorgegebenen Auswertungsalgorithmus erfolgen. Zum Beispiel umfasst das Auswerten der durch die Lichtsignaldetektionsereignisinformationen repräsentierten Lichtsignaldetektionsereignissen zu einem jeweiligen Laderaumbereich. Wie oben offenbart, soll das Ansteuern der Lichtsignalquellen und/oder der Lichtsignaldetektoren eine solche Zuordnung ermöglichen. Das Auswerten kann dementsprechend zumindest teilweise auf dem Ansteuern (z.B. der vorgegebenen Reihenfolge in der die Lichtsignalquellen und/oder die Lichtsignaldetektoren angesteuert wurden) basieren. Ferner kann das Auswerten der Lichtsignaldetektionsereignisinformationen beispielsweise das Bestimmen für jeden der Laderaumbereiche, ob die dem jeweiligen Laderaumbereich zugeordneten Lichtsignaldetektionsereignisse darauf hindeuten, dass der jeweilige Laderaumbereich belegt oder unbelegt ist, umfassen. Zu diesem Zweck können Entscheidungsregeln (z.B. in Form eines Entscheidungsbaums oder einer Entscheidungsmatrix) vorgegeben sein.

Es versteht sich, dass das Auswerten der Lichtsignaldetektionsereignisinformationen auch gemäß einem Algorithmus zum maschinellen Lernen (z.B. einem Algorithmus zum überwachten oder unüberwachten Lernen) erfolgen kann.

Die Erfindung stellt somit eine durch einfache Mittel wie Lichtsignalquellen und Lichtsignaldetektoren realisierbare Lösung zum Erkennen von belegten und unbelegten Laderaumbereichen in einem Laderaum eines Nutzfahrzeugs bereit

In beispielhaften Ausführungsformen der Erfindung repräsentieren die Lichtsignaldetektionsereignisinformationen durch die Lichtsignaldetektoren erfasste Lichtsignaldetektionsereignisse.

Zum Beispiel ist ein jeweiliges Lichtsignaldetektionsereignis das Detektieren oder das Nicht-Detektieren eines Lichtsignals (z.B. eines durch eine jeweilige Lichtsignalquelle der Lichtsignalquellen ausgesendetes Lichtsignal) durch einen jeweiligen Lichtsignaldetektor der Lichtsignaldetektoren. Ein solches Lichtsignaldetektionsereignis kann beispielsweise durch eine binäre Information wie "0" für Nicht-Detektieren und "1" für Detektieren eines Lichtsignals repräsentiert werden.

Neben dem jeweiligen Lichtsignaldetektionsereignis kann jede der Lichtsignaldetektionsereignisinformationen auch den jeweiligen Zeitpunkt, zu dem das jeweilige Lichtsignaldetektionsereignis erfasst wurde, und/oder den jeweiligen Lichtsignaldetektor, der das jeweilige Lichtsignaldetektionsereignis erfasst hat, repräsentieren. Ein Zeitpunkt kann beispielsweise durch eine entsprechende Zeitangabe in einem vorgegebenen Zeitformat (z.B. Unixzeit) repräsentiert werden; und ein Lichtsignaldetektor kann beispielsweise durch eine Kennung (z.B. eine Seriennummer, eine Netzwerkadresse, oder ein Name) repräsentiert werden.

In beispielhaften Ausführungsformen der Erfindung sind die Lichtsignalquellen und die Lichtsignaldetektoren zumindest teilweise an Begrenzungsflächen des Laderaums angeordnet Wie oben offenbart, kann eine solche Begrenzungsfläche beispielsweise ein Laderaumboden, ein Laderaumdach, eine Stirnwand, eine Seitenwand oder eine Rückwand des Laderaums sein.

In beispielhaften Ausführungsformen der Erfindung sind die Lichtsignalquellen und die Lichtsignaldetektoren zumindest teilweise an gegenüberliegenden Begrenzungsflächen des Laderaums angeordnet sind. Zum Beispiel bilden jeweils zwei der an gegenüberliegenden Begrenzungsflächen des Laderaums angeordneten Lichtsignalquellen und Lichtsignaldetektoren eine jeweilige Gabellichtschranke für einen jeweiligen Laderaumbereich der Laderaumbereiche. Dabei soll unter einer Gabellichtschranke für einen Laderaumbereich beispielsweise eine Lichtschranke verstanden werden, deren Lichtsignalquelle und deren Lichtsignaldetektor derart angeordnet sind, dass der jeweilige Lichtsignaldetektor ein durch die jeweilige Lichtsignalquelle ausgesendetes Lichtsignal zumindest dann detektiert, wenn zumindest ein Teil des Lichtsignals den Laderaumbereich durchdringt.

In beispielhaften Ausführungsformen der Erfindung sind die Lichtsignalquellen und die Lichtsignaldetektoren zumindest teilweise an der gleichen Begrenzungsfläche des Laderaums angeordnet. Zum Beispiel bilden jeweils zwei der an der gleichen Begrenzungsfläche des Laderaums angeordneten Lichtsignalquellen und Lichtsignaldetektoren eine jeweilige Reflexlichtschranke für einen jeweiligen Laderaumbereich der Laderaumbereiche. Dabei soll unter einer Reflexlichtschranke für einen Laderaumbereich beispielsweise eine Lichtschranke verstanden werden, deren Lichtsignalquelle und deren Lichtsignaldetektor derart angeordnet sind, dass der jeweilige Lichtsignaldetektor ein durch die jeweilige Lichtsignalquelle ausgesendetes Lichtsignal zumindest dann detektiert, wenn zumindest ein Teil des Lichtsignals in dem Laderaumbereich (z.B. durch ein Ladegut) reflektiert wird.

In beispielhaften Ausführungsformen der Erfindung sind im Laderaumboden eines jeden Laderaumbereichs zumindest eine Lichtsignalquelle der Lichtsignalquellen und zumindest ein Lichtsignaldetektor der Lichtsignaldetektoren angeordnet. Ferner können weitere Lichtsignaldetektoren der Lichtsignaldetektoren im Laderaumdach angeordnet sein.

Die jeweilige Lichtsignalquelle und der jeweilige Lichtsignaldetektor, die im Laderaumboden eines jeweiligen Laderaumbereichs angeordnet sind, können beispielsweise eine Reflexlichtschranke für diesen jeweiligen Laderaumbereich bilden. Dies bedeutet, dass ein durch einen der im Laderaumboden angeordneten Lichtsignaldetektoren erfasstes Lichtsignaldetektionsereignis indikativ dafür sein kann, ob zumindest ein Teil eines durch die im gleichen Laderaumbereich angeordnete Lichtsignalquelle ausgesendeten Lichtsignals in dem Laderaumbereich (z.B. durch ein Ladegut) reflektiert wurde.

Die weiteren im Laderaumdach angeordneten Lichtsignaldetektoren können beispielsweise mit den im Laderaumboden eines jeweiligen Laderaumbereichs angeordneten Lichtsignaldetektoren eine Gabellichtschranke für den jeweiligen Laderaumbereich bilden. Dies bedeutet, dass ein durch einen der weiteren im Laderaumdach angeordneten Lichtsignaldetektoren erfasstes Lichtsignaldetektionsereignis indikativ dafür ist, ob zumindest ein Teil eines durch eine der im Laderaumboden angeordneten Lichtsignalquellen ausgesendeten Lichtsignals nicht in dem Laderaumbereich (z.B. durch ein Ladegut) absorbiert und/oder reflektiert wurde und somit den Laderaumbereich zumindest teilweise durchdrungen hat.

Die entsprechend angeordneten Lichtsignalquellen und Lichtsignaldetektoren können beispielsweise derart angesteuert werden, dass jeweils nur die jeweilige(n) Lichtsignalquelle(n) und/oder die jeweilige(n) Lichtsignaldetektore(n) aktiviert sind, die eine Gabellichtschranke und/oder eine Reflexlichtschranke für den gleichen jeweiligen Laderaumbereich bilden. Dadurch können für jeden der Laderaumbereiche die in den ersten beiden Spalten der folgenden Tabelle dargestellten Kombinationen von Lichtsignaldetektionsereignissen (mit "0" für Nicht-Detektieren eines Lichtsignals und "1" für Detektieren eines Lichtsignals) erfasst und durch entsprechende Binärinformationen repräsentiert werden:

| Lichtsignaldetektor der Reflexlichtschranke | Lichtsignaldetektor der Gabellichtschranke | Laderaumbereich belegt | Laderaumbereich unbelegt |
|---|---|---|---|
| 0 | 0 | X | |
| 0 | 1 | | X |
| 1 | 0 | X | |
| 1 | 1 | X | |

Die beiden letzten Spalten stellen beispielhafte Entscheidungsregeln für das Bestimmen, ob ein Laderaumbereich belegt oder unbelegt ist, im Rahmen des Auswertens der entsprechenden Lichtsignaldetektionsereignisinformationen dar.

Wenn weder der Lichtsignaldetektor der Reflexlichtschranke noch der Lichtsignaldetektor der Gabellichtschranke ein Lichtsignal detektieren, deutet dies daraufhin, dass die Lichtsignalquelle (z.B. durch ein Ladegut) verdeckt ist und der jeweilige Laderaumbereich belegt sein könnte. Die in der Tabelle dargestellten Entscheidungsregeln geben für diesen Fall ("00") daher vor, dass bestimmt werden soll, dass der jeweilige Laderaumbereich belegt ist.

Wenn der Lichtsignaldetektor der Reflexlichtschranke ein Lichtsignal detektiert, deutet dies daraufhin, dass zumindest ein Teil des in dem jeweiligen Laderaumbereich (z.B. durch ein Ladegut) reflektiert wurde und der jeweilige Laderaumbereich belegt sein könnte. Die in der Tabelle dargestellten Entscheidungsregeln geben für diese beiden Fälle ("10" und "11") daher ebenfalls vor, dass bestimmt werden soll, dass der jeweilige Laderaumbereich belegt ist.

Nur wenn lediglich der Lichtsignaldetektor der Gabellichtschranke ein Lichtsignal detektiert, deutet dies daraufhin, dass kein Teil des in dem jeweiligen Laderaumbereich (z.B. durch ein Ladegut) absorbiert und/oder reflektiert wurde und der jeweilige Laderaumbereich unbelegt sein könnte. Die in der Tabelle dargestellten Entscheidungsregeln geben für diesen Fall ("01") daher vor, dass bestimmt werden soll, dass der jeweilige Laderaumbereich unbelegt ist.

Der oben genannten Tabelle lässt sich auch entnehmen, dass durch die Anordnung von Lichtsignaldetektoren an zwei Begrenzungsflächen (z.B. am Laderaumboden und am Laderaumdach) und die damit einhergehende Bildung von Gabel- und Reflexlichtschranken eine bessere Entscheidungsgrundlage für das Bestimmen, ob ein Laderaumbereich belegt oder unbelegt ist, geschaffen wird als wenn die Lichtsignaldetektoren nur an einer Begrenzungsfläche angeordnet werden. So kann eine Reflexlichtschranke alleine beispielsweise die Fälle "00" und "01" nicht unterscheiden; und eine Gabellichtschranke kann nicht alleine die Fälle "10" und "11" unterscheiden.

In beispielhaften Ausführungsformen der Erfindung sind Lichtsignalquellen und Lichtsignaldetektoren an seitlichen Begrenzungsflächen angeordnet. Zum Beispiel können in jedem Laderaumbereich jeweils zumindest ein Lichtsignaldetektor und zumindest eine Lichtsignalquelle an der gleichen seitlichen Begrenzungsfläche, um eine Reflexlichtschranke für den jeweiligen Laderaumbereich zu bilden, und/oder an gegenüberliegenden Begrenzungsflächen, um eine Gabellichtschranke zu bilden, angeordnet sein. Zum Beispiel können diese Lichtsignalquellen und Lichtsignaldetektoren mit einer vorgegebenen oder mit zumindest teilweise verschiedenen vorgegebenen Höhen über dem Laderaumboden an der jeweiligen Begrenzungsfläche angeordnet sein, so dass ein durch einen jeweiligen Lichtsignaldetektor erfasstes Lichtsignaldetektionsereignis indikativ dafür ist, ob der jeweilige Laderaumbereich zumindest bis zu der Höhe des jeweiligen Lichtsignaldetektors belegt oder unbelegt ist.

Dementsprechend kann das Auswerten von Lichtsignaldetektionsereignisinformationen, die von solchen an einer seitlichen Begrenzungsfläche angeordneten Lichtsignaldetektoren erhalten werden, ferner erfolgen, um zu bestimmen, wie hoch die belegten Laderaumbereiche des Laderaums belegt sind.

In beispielhaften Ausführungsformen der Erfindung beschreibt ein Laderaumbereich einen Bereich in dem Laderaum mit einer rechteckigen Grundfläche und zumindest einer Seitenlänge von 0,4 m oder einem ganzzahligen Vielfachen von 0,4 m. Zum Beispiel sind beide Seitenlängen der rechteckigen Grundfläche 0,4 m oder ein ganzzahliges Vielfaches von 0,4 m. Insbesondere soll auch ein Laderaumbereich mit einer quadratischen Grundfläche als Sonderform einer rechteckigen Grundfläche mit einer Seitenlänge von 0,4 m oder einem ganzzahligen Vielfachen von 0,4 m als offenbart verstanden werden. Dementsprechend können Laderaumbereiche mit einer solchen Grundfläche und Seitenlänge als belegt und unbelegt erkannt werden.

Ein typisches Maß im Transportwesen sind 0,4 m oder ganzzahlige Vielfache von 0,4m. So hat eine Europalette beispielsweise die Maße 1,2 m x 0,8 m; die Ladefläche eines LKWs, Sattelaufliegers oder Anhängers ist typischerweise 2,4 m breit und weist typischerweise 34 Stellplätze für Europaletten auf.

Das Erkennen von belegten und/oder unbelegten Laderaumbereichen mit einer quadratischen Grundfläche (d.h. einer Grundfläche am Laderaumboden) und einer Seitenlänge von 0,4 m ist somit gerade für Anwendungen im Transportwesen ausreichend. So ermöglicht eine solche (gedankliche oder tatsächliche) Unterteilung des Laderaums das Erkennen von belegten und unbelegten Palettenstellplätzen unabhängig davon, ob die Europaletten mit der Längsrichtung in Fahrtrichtung oder mit der Längsrichtung quer zur Fahrtrichtung geladen werden. Es versteht sich jedoch, dass je nach Anwendungsfall auch andere Laderaumbereiche mit einer rechteckigen Grundfläche (z.B. mit einer Seitenlänge von 0,4 m und einer Seitenlänge von 0,8 m) vorteilhaft sein können.

In beispielhaften Ausführungsformen der Erfindung sind die Lichtsignalquellen eingerichtet, ein Lichtsignal mit Wellenlängen im sichtbaren Bereich, im ultravioletten Bereich und/oder im infraroten Bereich auszusenden.

Ein Lichtsignal mit Wellenlängen im sichtbaren Bereich umfasst beispielsweise Licht im Wellenlängenbereich von 380 nm bis 780 nm.

Ein Lichtsignal mit Wellenlängen im ultravioletten Bereich umfasst beispielsweise Licht im Wellenlängenbereich von 10 nm bis 380 nm.

Ein Lichtsignal mit Wellenlängen im infraroten Bereich umfasst beispielsweise Licht im Wellenlängenbereich von 780 nm bis 1 mm.

In beispielhaften Ausführungsformen der Erfindung sind die Lichtsignalquellen eingerichtet, das Lichtsignal diffus auszusenden. Zu diesem Zweck können die Lichtsignalquellen beispielsweise jeweils einen Reflektor und/oder einen Diffusor und/oder eine Streuscheibe umfassen.

In beispielhaften Ausführungsformen der Erfindung sind die Lichtsignaldetektoren eingerichtet, diffuse Lichtsignale zu detektieren. Zu diesem Zweck können die Lichtsignaldetektoren beispielsweise entsprechend kalibriert werden und/oder einen Diffusor und/oder eine Streuscheibe umfassen.

Unter einem diffus ausgesendetem Lichtsignal und/oder einem diffusen Lichtsignal gemäß den oben offenberaten beispielhaften Ausführungsformen soll beispielsweise ein gestreutes Lichtsignal und/oder ein Lichtsignal mit einem Abstrahlwinkel größer oder gleich 30°, vorzugsweise größer oder gleich 60°, besonders vorzugsweise größer oder gleich 120° verstanden werden. Dabei soll unter dem Abstrahlwinkel der Winkel, zwischen dem die Lichtstärke des Lichtsignals größer oder gleich der halben maximalen Lichtstärke des Lichtsignals ist, verstanden werden. Dabei soll unter einem diffusen Lichtsignal sowohl ein Lichtsignal verstanden werden, das durch die Lichtsignalquelle diffus ausgesendet wird, als auch ein Lichtsignal, das durch die Lichtsignalquelle gerichtet Lichtsignalquelle ausgesendet wird, aber durch äußere Störeinflüsse wie beispielsweise Betauung und/oder Beschmutzung und/oder Zerkratzen einer Abdeckung der Lichtsignalquelle diffus gestreut wird.

Wenn das Lichtsignal durch die Lichtsignalquelle diffus ausgesendet wird und/oder diffuse Lichtsignale (z.B. durch die Lichtsignalquelle diffus ausgesendete und/oder durch solche äußere Störeinflüsse diffus gestreute Lichtsignale) durch die Lichtsignaldetektoren detektiert werden können, können die Auswirkungen durch solche äußere Störeinflüsse vermindert werden.

In beispielhaften Ausführungsformen der Erfindung umfasst das Verfahren ferner:
- Senden und/oder Bewirken des Sendens von Auswerteinformationen, die als unbelegt und/oder belegt bestimmte Laderaumbereiche eines Laderaums eines Nutzfahrzeugs repräsentieren, an eine entfernte Vorrichtung.

Die Auswerteinformationen können beispielsweise als Ergebnis des Auswertens erhalten werden. Die entfernte Vorrichtung kann die Auswerteinformationen beispielsweise nutzen, um die Beladung des Laderaums zu planen. Die entfernte Vorrichtung kann beispielsweise ein Server eines Transportdienstes sein.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

### Es zeigen:

- Fig. 1: eine schematische Darstellung einer beispielhaften Ausführungsform einer Steuer- und Auswertevorrichtung gemäß der Erfindung
- Fig. 2a-b: schematische Darstellungen einer beispielhaften Ausführungsform eines Nutzfahrzeugs gemäß der Erfindung; und
- Fig. 3: ein Flussdiagramm einer beispielhaften Ausführungsform eines Verfahrens gemäß der Erfindung.

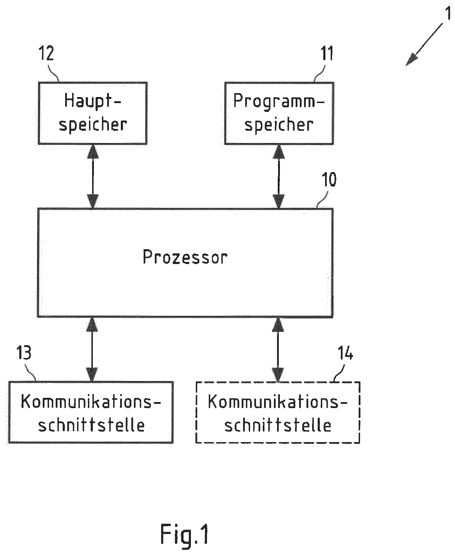

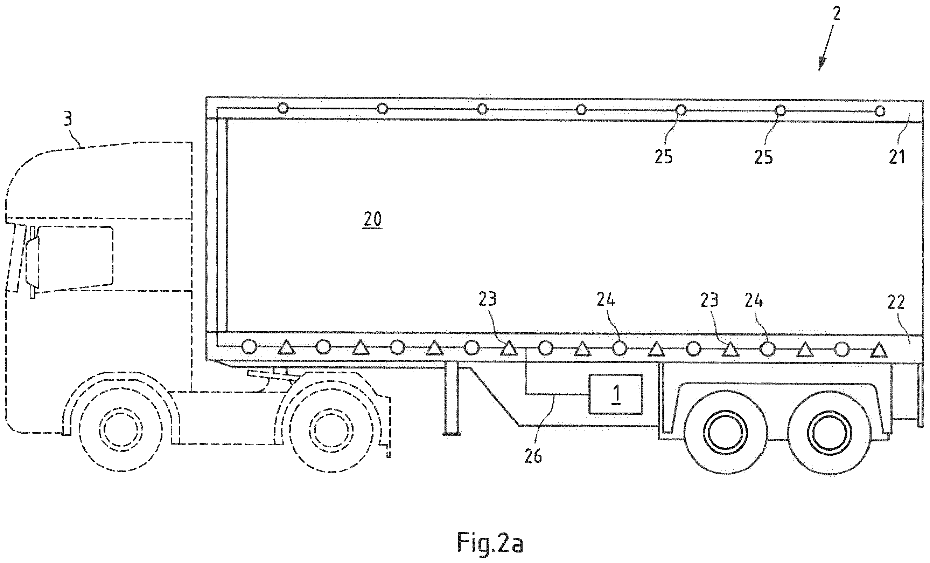

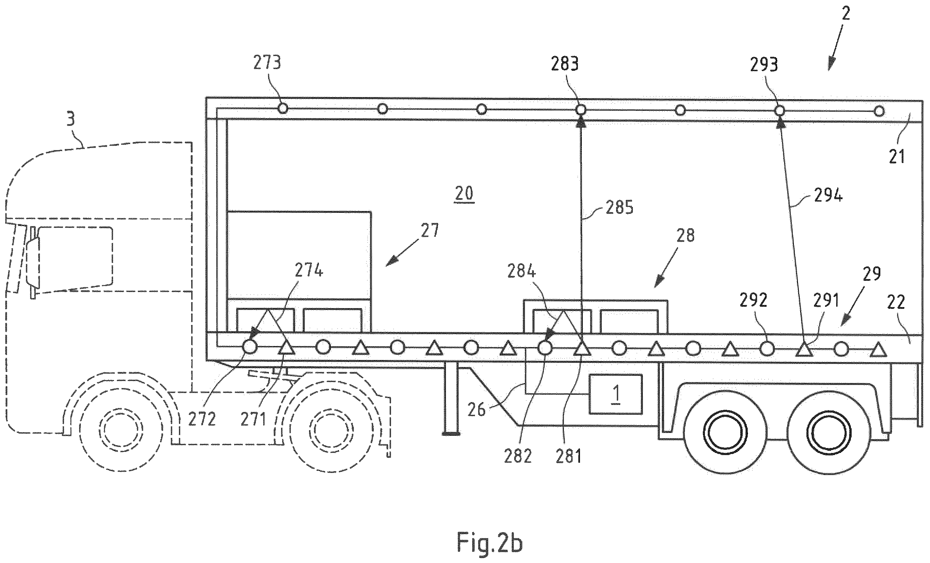

Fig. 1 ist eine schematische Darstellung einer beispielhaften Ausführungsform einer Steuer- und Auswertevorrichtung 1 gemäß der Erfindung. Die Steuer- und Auswertevorrichtung 1 kann beispielsweise Teil eines Nutzfahrzeugs (z.B. des in Fig. 2 dargestellten Nutzfahrzeugs 2) sein.

Die Steuer- und Auswertevorrichtung 1 umfasst beispielhaft einen Prozessor 10 und verbunden mit dem Prozessor 10 einen ersten Speicher als Programm- und Datenspeicher 11, einen zweiten Speicher als Hauptspeicher 12 sowie eine Kommunikationsschnittstelle 13. Ferner kann das mobile Gerät 1 optional eine zweite Kommunikationsschnittstelle 15 umfassen.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Steuer- und Auswertevorrichtung 1 auch mehrere Prozessoren 10 umfassen kann.

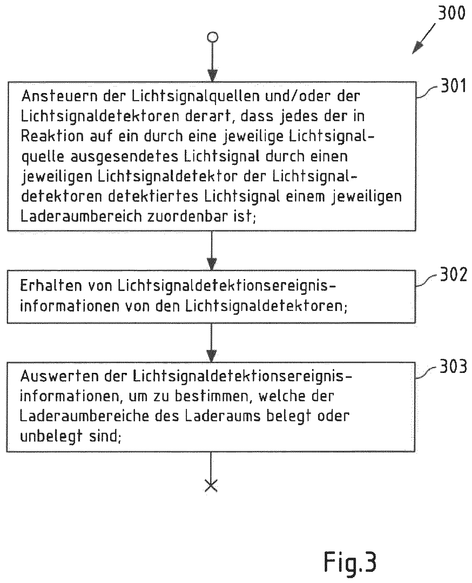

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines Computerprogramms gemäß der Erfindung, das Programmanweisungen umfasst, die den Prozessor 10 veranlassen, das Verfahren gemäß der Erfindung (z.B. das Verfahren gemäß dem in Fig. 3 dargestellten Flussdiagram 300) auszuführen und/oder zu steuern, wenn der Prozessor 10 diese in Programmspeicher 11 gespeicherten Programmanweisungen ausführt

Programmspeicher 11 enthält ferner beispielsweise das Betriebssystem der Steuer- und Auswertevorrichtung 1, das beim Starten der Steuer- und Auswertevorrichtung 1 zumindest teilweise in Hauptspeicher 12 geladen und vom Prozessor 10 ausgeführt wird. Insbesondere wird beim Starten des mobilen Geräts 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuer- und Auswertevorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

Prozessor 10 steuert die Kommunikationsschnittstelle 13, welche beispielsweise als Ethernet-, CAN-, K-Leitungs-, LIN- oder Flexray-Schnittstelle ausgebildet ist. Sie ist beispielsweise eingerichtet zur drahtgebundenen Kommunikation mit einer Vielzahl von Lichtsignalquellen und/oder einer Vielzahl von Lichtsignaldetektoren eines Nutzfahrzeugs (z.B. des in Fig. 2 gezeigten Nutzfahrzeugs 2) über ein Ethernet-Netzwerk oder ein CAN-, K-Leitungs-, LIN- oder Flexray-Bussystem des Nutzfahrzeugs. Zum Beispiel kann die Steuer- und Auswertevorrichtung 1 durch die Kommunikationsschnittstelle 13 Steuerinformationen an die Vielzahl von Lichtsignalquellen und/oder die Vielzahl von Lichtsignaldetektoren senden und/oder Lichtsignaldetektionsereignisinformationen von der Vielzahl von Lichtsignaldetektoren empfangen. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

Außerdem steuert Prozessor 10 die optionale Kommunikationsschnittstelle 14, welche beispielsweise als GSM-, UMTS- und/oder LTE-Schnittstelle ausgebildet ist. Sie ist beispielsweise eingerichtet zur Kommunikation mit einem entfernten Server (z.B. dem Server 5 eines Transportdienstes). Zum Beispiel kann die Steuer- und Auswertevorrichtung 1 durch die Kommunikationsschnittstelle 14 Auswerteinformationen, die unbelegte und/oder belegte Laderaumbereiche eines Laderaums eines Nutzfahrzeugs repräsentieren, an einen Server senden. Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

Die Komponenten 10 bis 14 der Steuer- und Auswertevorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Steuer- und Auswertevorrichtung 1 neben den Komponenten 10 bis 14 weitere Komponenten wie beispielsweise eine Benutzerschnittstelle umfassen kann.

Fig. 2a und 2b sind schematische Darstellungen einer beispielhaften Ausführungsform eines Nutzfahrzeugs 2 gemäß der Erfindung. Das Nutzfahrzeug 2 ist in Fig. 2a und 2b als Sattelauflieger 2 dargestellt, der von einem Zugfahrzeug 3 gezogen wird.

Im Folgenden wird die beispielhafte Ausführungsform des Sattelaufliegers 2 zunächst anhand von Fig. 2a erläutert. Sattelauflieger 2 umfasst einen Laderaum 20, eine Vielzahl von Lichtsignalquellen 23, eine Vielzahl von Lichtsignaldetektoren 24 und 25 sowie eine Steuer- und Auswertevorrichtung 1.

Der Laderaum 20 des Sattelaufliegers 2 wird oben durch das Laderaumdach 21 und unten durch den Laderaumboden 22 begrenzt. Ferner wird der Laderaum durch die nicht mit Bezugszeichen versehene Stirnwand und Rückwand sowie nicht dargestellte seitliche Begrenzungsflächen (z.B. Seitenplanen begrenzt).

Im Laderaumboden 22 sind die Vielzahl von Lichtsignalquellen 23 (dargestellt durch ein Dreieck) und eine Vielzahl von Lichtsignaldetektoren 24 angeordnet. Ferner sind im Laderaumdach ebenfalls eine Vielzahl von Lichtsignaldetektoren 25 angeordnet. Zum Beispiel sind die Lichtsignalquellen 23 und die Lichtsignaldetektoren 24 und 25 in Form von Streifen in dem Laderaumboden 22 und/oder dem Laderaumdach 21 eingelassen.

Die Vielzahl von Lichtsignalquellen 23 und die Vielzahl von Lichtsignaldetektoren 24 sind somit an der gleichen Begrenzungsfläche des Laderaums 20 (d.h. dem Laderaumboden 22) angeordnet, und die Vielzahl von Lichtsignalquellen 23 und die Vielzahl von Lichtsignaldetektoren 25 sind somit an gegenüberliegenden Begrenzungsflächen des Laderaums 20 (d.h. dem Laderaumboden 22 und dem Laderaumdach 21) angeordnet. Dabei bilden jeweils ein Paar aus im Laderaumboden 22 unmittelbar zueinander benachbart angeordneter Lichtsignalquelle und Lichtsignaldetektor eine Reflexlichtschranke und ein Paar aus gegenüberliegend angeordneter Lichtsignalquelle und Lichtsignaldetektor bilden eine Gabellichtschranke. Dabei kann ein Lichtsignaldetektor und/oder eine Lichtsignalquelle Teil mehrerer Lichtschranken sein. In Fig. 2a sind beispielsweise mehr Lichtsignalquellen 23 als Lichtsignaldetektoren 25 dargestellt, so dass ein Lichtsignaldetektor 25 mit mehreren der Lichtsignalquellen 23 jeweils eine Reflexlichtschranke bildet.

Wie oben offenbart, ist eine Lichtsignalquelle (z.B. jede der Lichtsignalquellen 23) beispielsweise eingerichtet, ein Lichtsignal auszusenden (z.B. wenn sie aktiviert ist). Dabei soll unter einem durch eine Lichtsignalquelle ausgesendeten Lichtsignal beispielsweise Licht verstanden werden, das durch die Lichtsignalquelle für eine vorgegebene Dauer und/oder mit einer vorgegebenen Lichtstärke und/oder mit einem vorgegebenen Lichtstrom und/oder mit einer vorgegebenen Leistung und/oder in einem vorgegebenen Wellenlängenbereich abgestrahlt wird. Zum Beispiel umfasst jede der Lichtsignalquellen 23 ein elektrisches Leuchtmittel wie eine Glühlampe, eine Halogenlampe, eine Leuchtstofflampe, eine Leuchtdiode (LED) oder eine LED-Lampe.

Wie ebenfalls oben offenbart ist ein Lichtsignaldetektor (z.B. jeder der Lichtsignaldetektoren 24 und 25) beispielsweise eingerichtet, ein durch die Lichtsignaldetektoren 23 ausgesendetes Lichtsignal zu detektieren und eine Lichtsignaldetektionsereignisinformation auszugeben (z.B. wenn er aktiviert ist). Eine durch einen Lichtsignaldetektor ausgegebene Lichtsignaldetektionsereignisinformation kann beispielsweise ein durch den Lichtsignaldetektor erfasstes Lichtsignaldetektionsereignisse (z.B. Nicht-Detektieren eines Lichtsignals oder Detektieren eines Lichtsignals) repräsentieren. Dabei ist ein solches Lichtsignaldetektionsereignis beispielsweise das Detektieren (z.B. wenn der Lichtsignaldetektor ein Licht zumindest für eine vorgegebene Dauer und/oder zumindest mit einer vorgegebenen Intensität und/oder Helligkeit und/oder in einem vorgegebenen Wellenlängenbereich erfasst) oder das Nicht-Detektieren (z.B. wenn der Lichtsignaldetektor kein Licht zumindest für eine vorgegebene Dauer und/oder zumindest mit einer vorgegebenen Helligkeit (z.B. Beleuchtungsstärke) und/oder in einem vorgegebenen Wellenlängenbereich erfasst) eines Lichtsignals. Zum Beispiel umfasst jeder der Lichtsignaldetektoren eine Fotozelle, einen Fotowiderstand, einen Fototransistor oder eine Fotodiode.

Der Laderaum 20 ist in mehrere Laderaumbereiche unterteilbar. Im Folgenden wird beispielhaft davon ausgegangen, dass ein Laderaumbereich einen Bereich in dem Laderaum 20 beschreibt, der am Laderaumboden eine quadratische Grundfläche mit einer Seitenlänge von 0,4 m hat. Die Anzahl und Anordnung der Lichtsignalquellen 23 und der Lichtsignaldetektoren 24 und 25 ist beispielsweise derart gewählt, dass diese für jeden der Laderaumbereiche des Laderaums 20 zumindest eine Reflexlichtschranke und eine Gabellichtschranke bilden. Dabei soll, wie oben offenbart, unter einer Gabellichtschranke für einen Laderaumbereich beispielsweise eine Lichtschranke verstanden werden, deren Lichtsignalquelle und deren Lichtsignaldetektor derart angeordnet sind, dass der jeweilige Lichtsignaldetektor ein durch die jeweilige Lichtsignalquelle ausgesendetes Lichtsignal zumindest dann detektiert, wenn zumindest ein Teil des Lichtsignals in dem Laderaumbereich nicht absorbiert und/oder reflektiert wird und diesen somit durchdringt; und unter einer Reflexlichtschranke für einen Laderaumbereich soll beispielsweise eine Lichtschranke verstanden werden, deren Lichtsignalquelle und deren Lichtsignaldetektor derart angeordnet sind, dass der jeweilige Lichtsignaldetektor ein durch die jeweilige Lichtsignalquelle ausgesendetes Lichtsignal zumindest dann detektiert, wenn zumindest ein Teil des Lichtsignals in dem Laderaumbereich (z.B. durch ein Ladegut) reflektiert wird.

Die Lichtsignalquellen 23 und die Lichtsignaldetektoren 24 und 25 sind beispielsweise jeweils einzeln durch die Steuer- und Auswertevorrichtung 1 über Verbindungen (z.B. Verbindung 26) eines Ethernet-Netzwerks oder eines CAN-, K-Leitungs-, LIN- oder Flexray Bussystems ansteuerbar (z.B. aktivierbar).

In Fig. 2b sind schematisch 3 Laderaumbereiche 27, 28 und 29 dargestellt, wobei Laderaumbereich 27 mit eine beladenen Europalette belegt ist, Laderaumbereich 28 mit einer unbeladenen Europalette belegt ist und Laderaumbereich 29 unbelegt ist.

Wie sich aus Fig. 2b ergibt, wird für jeden der Laderaumbereiche 27, 28 und 29 zumindest eine jeweilige Relfexlichtschranke durch die Lichtsignalquelle 271, 281 oder 291 der Lichtsignalquellen 23 und die Lichtsignaldetektor 272, 282 oder 292 der Lichtsignaldetektoren 24 sowie zumindest eine jeweilige Gabellichtschranke durch die Lichtsignalquelle 271, 281 oder 291 der Lichtsignalquellen 23 und die Lichtsignaldetektoren 273, 283 und 293 der Lichtsignaldetektoren 25 gebildet Zum Beispiel bilden Lichtsignalquelle 271 und Lichtsignaldetektor 272 eine Reflexlichtschranke für Laderaumbereich 27, und Lichtsignalquelle 271 und Lichtsignaldetektor 273 bilden eine Gabellichtschranke für Laderaumbereich 27.

Fig. 3 zeigt ein Flussdiagramm 300 eines Ausführungsbeispiels eines Verfahrens gemäß der Erfindung. Im Folgenden wird beispielhaft angenommen, dass die Schritte 301 bis 303 des Flussdiagramms 300 durch die Steuer- und Auswertevorrichtung des Sattelaufliegers 2 (vgl. Fig. 2a und 2b) ausgeführt werden.

In einem Schritt 301 werden die Lichtsignalquellen 23 und/oder die Lichtsignaldetektoren 24 und 25 derart angesteuert, dass jedes der in Reaktion auf ein durch eine jeweilige Lichtsignalquelle der Lichtsignalquellen 23 ausgesendetes Lichtsignal durch einen jeweiligen Lichtsignaldetektor der Lichtsignaldetektoren 24 und 25 detektiertes Lichtsignal einem jeweiligen Laderaumbereich zuordenbar ist.

Zum Beispiel können die Lichtsignalquellen 23 und/oder die Lichtsignaldetektoren 24 und 25 derart angesteuert werden, dass jeweils nur die Lichtsignalquellen und die Lichtsignaldetektoren gleichzeitig aktiviert sind, die eine Lichtschranke (d.h. Gabellichtschranke und/oder Reflexlichtschranke) für den gleichen Laderaumbereich der Laderaumbereiche bilden, so dass jeweils nur Lichtschranken für einen Laderaumbereich aktiv sind. Zum Beispiel werden die Lichtsignalquellen 23 und/oder die Lichtsignaldetektoren 24 und 25 derart angesteuert werden, dass die Lichtschranken für die einzelnen Laderaumbereiche nacheinander aktiviert sind. Dadurch können die gleichzeitig durch die Lichtsignaldetektoren 24 und 25 detektierten Lichtsignalereignisse eindeutig einem Laderaumbereich der Laderaumbereiche zugeordnet werden. Im Hinblick auf Fig. 2b bedeutet dies beispielsweise, dass die Komponenten 271, 272 und 273 für den Laderaumbereich 27 oder die Komponenten 281, 282 und 283 für den Laderaumbereich 28 oder die Komponenten 291, 292 und 293 für den Laderaumbereich 29 jeweils gleichzeitig aktiviert werden.

Um die Lichtsignalquellen 23 und/oder die Lichtsignaldetektoren 24 und 25 anzusteuern, kann die Steuer- und Auswertevorrichtung 1 beispielsweise entsprechende Steuerinformationen an die Lichtsignalquellen 23 und/oder die Lichtsignaldetektoren 24 und 25 senden (z.B. über die Kommunikationsschnittstelle 13 senden).

In einem Schritt 302 werden Lichtsignaldetektionsereignisinformationen von den Lichtsignaldetektoren 24 und 25 erhalten (z.B. über die Kommunikationsschnittstelle 13 empfangen). Das Erhalten in Schritt 302 kann beispielsweise in Reaktion auf das Ansteuern und/oder Aktivieren einer oder mehrerer der Lichtsignalquellen 23 und/oder der Lichtsignaldetektoren 24 und 25 erfolgen. Zum Beispiel werden die Lichtsignaldetektionsereignisinformationen für die einzelnen Laderaumbereiche nacheinander erhalten.

Wenn jedem der Laderaumbereiche eine Reflexlichtschranke und eine Gabellichtschranke aufweist, können die Lichtsignaldetektionsereignisinformationen für jeden der Laderaumbereiche die in den ersten beiden Spalten der folgenden Tabelle dargestellten Kombinationen von Lichtsignaldetektionsereignissen (mit "0" für Nicht-Detektieren eines Lichtsignals und "1" für Detektieren eines Lichtsignals) binär repräsentieren:

| Lichtsignaldetektor der Reflexlichtschranke | Lichtsignaldetektor der Gabellichtschranke |
|---|---|
| 0 | 0 |
| 0 | 1 |
| 1 | 0 |
| 1 | 1 |

Zum Beispiel werden in Schritt 302 für den Laderaumbereich 27 die Binärinformationen "10" erhalten, da der durch die Lichtsignalquelle 271 ausgesendete Lichtsignal 274 vollständig an der beladenen Europalette reflektiert wird und somit nur der Lichtsignaldetektor 272 das Lichtsignal 272 detektiert. Dagegen wird für den Laderaumbereich 28 beispielsweise die Binärinformationen "11" erhalten, da der durch die Lichtsignalquelle 281 ausgesendete Lichtsignal zu einem Teil 284 an der beladenen Europalette reflektiert wird und zu einem Teil 285 im Laderaumbereich 28 nicht reflektiert und/oder absorbiert wird. Für den unbelegten Laderaumbereich 29 wird die Binärinformationen "01" erhalten, da das durch die Lichtsignalquelle 291 ausgesendete Lichtsignal 294 im Laderaumbereich 29 nicht reflektiert und/oder absorbiert wird und diesen daher durchdringt.

Anschließend werden in einem Schritt 303 die Lichtsignaldetektionsereignisinformationen ausgewertet, um zu bestimmen, welche der Laderaumbereiche des Laderaums belegt oder unbelegt sind. Das Auswerten kann beispielsweise zumindest teilweise basierend auf vorgegebenen Entscheidungsregeln erfolgen.

Wenn die Lichtsignaldetektionsereignisinformationen für jeden der Laderaumbereiche die in den ersten beiden Spalten der bereits oben offenbarten Tabelle dargestellten Kombinationen von Lichtsignaldetektionsereignissen (mit "0" für Nicht-Detektieren eines Lichtsignals und "1" für Detektieren eines Lichtsignals) binär repräsentieren, können beispielhafte Entscheidungsregeln durch die beiden letzten Spalten der folgenden Tabelle repräsentiert werden:

| Lichtsignaldetektor der Reflexlichtschranke | Lichtsignaldetektor der Gabellichtschranke | Laderaumbereich belegt | Laderaumbereich unbelegt |
|---|---|---|---|
| 0 | 0 | X | |
| 0 | 1 | | X |
| 1 | 0 | X | |
| 1 | 1 | X | |

Diese Tabelle und die dadurch repräsentierten Entscheidungsregeln wurden bereits im Detail offenbart. Basierend auf diesen Entscheidungsregeln würde für die Lichtsignaldetektionsereignisinformationen "01", wie sie beispielsweise für den Laderaumbereich 29 erhalten werden, als Ergebnis des Auswertens in Schritt 303 bestimmt, dass der Laderaumbereich 29 unbelegt ist. Für die Lichtsignaldetektionsereignisinformationen "10" und "11", wie sie beispielsweise für die Laderaumbereiche 27 und 28 erhalten werden, wird als Ergebnis des Auswertens in Schritt 303 basierend auf diesen Entscheidungsregeln dagegen bestimmt, dass die Laderaumbereiche 27 und 28 belegt sind.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Erkennen von belegten und/oder unbelegten Laderaumbereichen in einem Laderaum eines Nutzfahrzeugs (2), wobei der Laderaum (20) in eine Vielzahl von Laderaumbereiche (27, 28, 29) unterteilbar ist, wobei in dem Laderaum ein oder mehrere Lichtsignalquellen (23, 271, 281, 291) und eine Vielzahl von Lichtsignaldetektoren (24, 25, 272, 273, 282,283, 292, 293) oder eine Vielzahl von Lichtsignalquellen (23, 271, 281, 291) und ein oder mehrere Lichtsignaldetektoren (24, 25, 272, 273, 282, 283, 292, 293) angeordnet sind, und wobei das Verfahren umfasst:
- Ansteuern (301) der Lichtsignalquellen (23, 271, 281, 291) und/oder der Lichtsignaldetektoren (24, 25, 272, 273, 282, 283, 292, 293) derart, dass jedes der in Reaktion auf ein durch eine jeweilige Lichtsignalquelle ausgesendetes Lichtsignal (274, 284, 285, 294) durch einen jeweiligen Lichtsignaldetektor der Lichtsignaldetektoren (24, 25, 272, 273, 282, 283, 292, 293) detektiertes Lichtsignal einem jeweiligen Laderaumbereich (27, 28, 29) zuordenbar ist;
- Erhalten (302) von Lichtsignaldetektionsereignisinformationen von den Lichtsignaldetektoren (24, 25, 272, 273, 282, 283, 292, 293);
- Auswerten (303) der Lichtsignaldetektionsereignisinformationen, um zu bestimmen, welche der Laderaumbereiche (27, 28, 29) des Laderaums (20) belegt oder unbelegt sind.

2. Verfahren nach Anspruch 1, wobei die Lichtsignaldetektionsereignisinformationen durch die Lichtsignaldetektoren (24, 25, 272, 273, 282, 283, 292, 293) erfasste Lichtsignaldetektionsereignisse repräsentieren, und wobei ein jeweiliges Lichtsignaldetektionsereignis das Detektieren oder das Nicht-Detektieren eines durch eine jeweilige Lichtsignalquelle der Lichtsignalquellen (23, 271, 281, 291) ausgesendetes Lichtsignal (274, 284, 285, 294) durch einen jeweiligen Lichtsignaldetektor der Lichtsignaldetektoren (24, 25, 272, 273, 282, 283, 292, 293) ist.

3. Verfahren nach einem der Ansprüche 1 und 2, wobei die Lichtsignalquellen (23, 271, 281, 291) und die Lichtsignaldetektoren (24, 25, 272, 273, 282, 283, 292, 293) zumindest teilweise an gegenüberliegenden Begrenzungsflächen (21, 22) des Laderaums (20) angeordnet sind, und/oder wobei die Lichtsignalquellen (23, 271, 281, 291) und die Lichtsignaldetektoren (24, 25, 272, 273, 282, 283, 292, 293) zumindest teilweise an der gleichen Begrenzungsfläche (21, 22) des Laderaums (20) angeordnet sind.

4. Verfahren nach einem der Ansprüche 1 bis 3, wobei im Laderaumboden (22) eines jeden Laderaumbereichs (27, 28, 29) zumindest eine Lichtsignalquelle der Lichtsignalquellen (23, 271, 281, 291) und zumindest ein Lichtsignaldetektor der Lichtsignaldetektoren (24, 272, 282, 292) angeordnet sind.

5. Verfahren nach Anspruch 4, wobei ein durch einen der im Laderaumboden (22) angeordneten Lichtsignaldetektoren (24, 272, 282, 292) erfasstes Lichtsignaldetektionsereignis indikativ dafür ist, ob zumindest ein Teil eines durch die im gleichen Laderaumbereich (27, 28, 29) angeordnete Lichtsignalquelle (23, 271, 281, 291) ausgesendeten Lichtsignals in dem Laderaumbereich reflektiert wurde.

6. Verfahren nach einem der Ansprüche 4 und 5, wobei weitere Lichtsignaldetektoren (25, 273, 283, 293) der Lichtsignaldetektoren im Laderaumdach (21) angeordnet sind.

7. Verfahren nach Anspruch 6, wobei ein durch einen der weiteren im Laderaumdach angeordneten Lichtsignaldetektoren (25, 273, 283, 293) erfasstes Lichtsignaldetektionsereignis indikativ dafür ist, ob zumindest ein Teil eines durch eine der im Laderaumboden angeordneten Lichtsignalquellen (23, 271, 281, 291) ausgesendeten Lichtsignals nicht in dem Laderaumbereich absorbiert und/oder reflektiert wurde.

8. Verfahren nach einem der Ansprüche 1 bis 7, wobei ein Laderaumbereich (27, 28, 29) einen Bereich in dem Laderaum mit einer rechteckigen und/oder quadratischen Grundfläche und zumindest einer Seitenlänge von 0,4 m oder einem ganzzahligen Vielfachen von 0,4 m beschreibt.

9. Verfahren nach einem der Ansprüche 1 bis 8, wobei die Lichtsignalquellen (23, 271, 281, 291) eingerichtet sind, ein Lichtsignal mit Wellenlängen im sichtbaren Bereich, im ultravioletten Bereich und/oder im infraroten Bereich auszusenden.

10. Verfahren nach einem der Ansprüche 1 bis 9, wobei die Lichtsignalquellen (23, 271, 281, 291) eingerichtet sind, das Lichtsignal diffus auszusenden.

11. Verfahren nach einem der Ansprüche 1 bis 10, wobei die Lichtsignaldetektoren (24, 25, 272, 273, 282, 283, 292, 293) eingerichtet sind, diffuse Lichtsignale zu detektieren.

12. Computerprogramm, umfassend Programmanweisungen, die dazu ausgebildet sind, bei Ausführung durch mindestens einen Prozessor (10) eine Vorrichtung (1) zu veranlassen, das Verfahren nach einem der Ansprüche 1 bis 11 auszuführen.

13. Steuer- und Auswertevorrichtung (1) eingerichtet zur Ausführung und/oder Steuerung des Verfahrens nach einem der Ansprüche 1 bis 11 oder umfassend jeweilige Mittel (10-14) zur Ausführung und/oder Steuerung der Schritte des Verfahrens nach einem der Ansprüche 1 bis 11.

14. Nutzfahrzeug (2) und/oder Nutzfahrzeugaufbau, umfassend:
- einen durch Begrenzungsflächen gebildeten Laderaum (20);
- ein oder mehrere Lichtsignalquellen (23, 271, 281, 291) und eine Vielzahl von Lichtsignaldetektoren (24, 25, 272, 273, 282, 283, 292, 293) oder eine Vielzahl von Lichtsignalquellen (23, 271, 281, 291) und ein oder mehrere Lichtsignaldetektoren (24, 25, 272, 273, 282, 283, 292, 293),
- eine Steuer- und Auswertevorrichtung (1) nach Anspruch 13.
